# EUROPÄISCHE PATENTSCHRIFT

(11) **EP 1 902 167 B1**
(45) Veröffentlichungstag und Bekanntmachung des Hinweises auf die Patenterteilung: **11.09.2013**
(21) Anmeldenummer: 06743126.2
(22) Anmeldetag: 08.06.2006
(51) Int. Cl.: D04C 1/06

(54) **STABFÖRMIGER FASERVERBUNDWERKSTOFF, VERFAHREN UND VORRICHTUNG ZU SEINER HERSTELLUNG**
ROD-SHAPED FIBRE COMPOSITE, AND METHOD AND DEVICE FOR THE PRODUCTION THEREOF
MATERIAU COMPOSITE EN FORME DE BARRE RENFORCE PAR DES FIBRES, PROCEDE ET DISPOSITIF POUR SA PRODUCTION

(30) Priorität: 09.06.2005 DE 102005027879
(43) Veröffentlichungstag der Anmeldung: 26.03.2008
(73) Patentinhaber: Deutsche Institute für Textil- und Faserforschung Denkendorf Stiftung des öffentlichen Rechts, 73770 Denkendorf (DE)
(72) Erfinder: MILWICH, Markus, 72762 Reutlingen (DE); LINTI, Carsten, 70372 Stuttgart (DE); STEGMAIER, Thomas, 73277 Owen (DE); PLANCK, Heinrich, 72622 Nürtingen (DE); SPECK, Thomas, 79227 Schallstadt (DE); HERRMANN, Axel, 21683 Stade (DE); SPECK, Olga, 79227 Schallstadt (DE)
(74) Vertreter: Patentanwälte Ruff, Wilhelm, Beier, Dauster & Partner
(86) Internationale Anmeldenummer: PCT/EP2006/005447
(87) Internationale Veröffentlichungsnummer: WO 2006/131344

(56) Entgegenhaltungen:
- EP-A1- 0 243 119
- EP-A1- 0 327 085
- US-A- 4 090 002
- US-A- 5 619 903

## Beschreibung

Die Erfindung betrifft ein Verfahren zur Herstellung eines stabförmigen Faserverbundwerkstoffes, insbesondere eines erfindungsgemäßen stabförmigen Faserverbundwerkstoffs, sowie eine Vorrichtung zur kontinuierlichen Herstellung eines stabförmigen Faserverbundwerkstoffes.

Faserverbundwerkstoffe sind allgemein bekannt. Sie weisen einen Matrixwerkstoff auf, in den Fasern eingebettet sind. Durch die Fasern wird relativ zur Masse des Werkstoffes eine hohe Steifigkeit und Festigkeit des Faserverbundwerkstoffes erzielt, insbesondere in Faserrichtung. Der Matrixwerkstoff dient insbesondere dazu, die Fasern zu schützen und die auftretenden Kräfte in die Fasern einzuleiten.

Es sind insbesondere auch Faserverbundwerkstoffe bekannt, die profil- bzw. stabförmig ausgebildet sind. Besondere Faserverbundwerkstoffe weisen Fasern auf, die zumindest zum Teil als ein Rundgeflecht ausgebildet sind, das vom Matrixwerkstoff umgeben ist. Profile aus einem solchen Faserverbundwerkstoff können zur Erzeugung sehr stabiler Bauteile genutzt werden. Zur zusätzlichen Verstärkung solcher Rundgeflechte ist es bekannt, in die Wandung des Rundgeflechts weitere Fasern, gegebenenfalls in Form von Strängen, einzufügen, deren Ausrichtung im wesentlichen in Längsrichtung des Faserverbundwerkstoffes verläuft.

Aus der US 4,090,002 A ist ein flächiger Verbundwerkstoff bekannt, zu dessen Herstellung parallele Stränge mit Fasern umwunden und mit einer Matrix versehen werden. Aus der EP 0243119 A1 und der US 5,619,903 sind Flechtverfahren und -vorrichtungen zur Herstellung von Faserverbundwerkstoffen bekannt.

Aufgabe der Erfindung ist es, für einen Faserverbundwerkstoff ein Verfahren sowie eine Vorrichtung zu dessen Herstellung zu schaffen, die auf vorteilhafte Weise die Einbringung von Kanälen im Faserverbundwerkstoff gestatten.

Erfindungsgemäß wird diese Aufgabe durch ein Verfahren nach Anspruch 1 und durch eine Vorrichtung nach Anspruch 9 gelöst

Bei dem Faserverbundwerkstoff, zu dessen Herstellung das erfndungsgemäße Verfahren und die erfindungsgemäßen Vorrichtung dienen, handelt es sich vorzugsweise um einen stabförmigen Faserverbundwerkstoff mit einer Wandung aus einem röhrenförmigen Rundgeflecht aus rechtsgängigen und linksgängigen Helixsträngen aus Fasermaterial und einem die Helixstränge des Rundgeflecht einbettenden Matrixwerkstoff, wobei im Bereich der Wandung des röhrenförmigen Rundgeflechts zwischen den rechtsgängigen und den linksgängigen Helixsträngen in Längsrichtung des stabförmigen Faserverbundwerkstoffes verlaufende Wandungskammern ausgebildet sind, die von einer definierten Phasengrenze des Matrixwerkstoffes begrenzt sind.

Die Phasengrenzen begrenzen die Wandungskammern gegenüber der Matrix und den Fasern. Sie erlauben eine Vielzahl von vorteilhaften Ausprägungen des Faserverbundwerkstoffes, abhängig davon, ob es sich um mit Phasengrenzen Fest-Gasförmig, Fest-Flüssig oder Fest-Fest handelt. Diese Vorteile liegen beispielsweise in Transportmöglichkeiten für Medien und Signale oder auch in der Verbesserung von mechanischen Eigenschaften des Faserverbundwerkstoffes. Eine Vielzahl von Möglichkeiten ist im folgenden detailliert erläutert.

Als Fasermaterialien kommen die üblicherweise für Faserverbundwerkstoffe verwendeten Fasermaterialien wie beispielsweise Kohlenstofffasern, Glasfasern, Kunststofffasern wie Aramidfasern, oder auch Naturfasern in Betracht. Auch metallische Faserwerkstoffe können bei dem Rundgeflecht Anwendung finden. Als Matrixwerkstoff können beispielsweise Kunststoffe, insbesondere Kunstharze wie Polyurethan, Polyester, Polyether-Ketone, oder auch Glaswerkstoffe oder Beton eingesetzt werden. Weitere mögliche Matrixwerkstoffe sind Thermoplasten wie PBT, Polypropylen und Polyamid sowie Elastomere wie Neopren und Kautschuk. Auch Naturmatrixsysteme können zweckmäßig sein. Zur Einbringung kommt unter anderem das direkte Einspritzen des Matrixwerkstoffs, In-situ-Polymerisation oder auch die Verwendung von Hybridgarnen mit Fasermaterial und im Verlauf der Herstellung erwärmtem Matrixwerkstoff in Frage.

Das röhrenförmige Rundgeflecht hat eine zylindrische Form, die je nach Anforderungsprofil verschiedenste Querschnitte aufweisen oder in solche gebracht werden kann. Normalerweise haben die Rundgeflechte einen kreisförmigen Querschnitt. Für solche Anwendungen, bei denen der stabförmige Faserverbundwerkstoff zur Aufnahme von einer oder mehreren Leitungen für Strom oder Fluide ausgebildet ist, werden kreisförmige Querschnitte als vorteilhaft angesehen. Es sind jedoch auch beispielsweise elliptische, vieleckige oder komplexere Querschnitte denkbar und in einzelnen Anwendungsfällen zweckmäßig, beispielsweise bei der Herstellung von Bauteilen beispielsweise für den Karosseriebau. Das Rundgeflecht weist Helixstränge zweier verschiedener Orientierungen auf, die in an sich bekannter Art und Weise zu einem stabilen Verbund miteinander verflochten sind. Die Helixstränge verlaufen zum Teil in linksgängiger und zum Teil in rechtsgängiger Schraubenform. In der Flechtstruktur ergeben sich in der Wandung in Längsrichtung des Rundgeflechts erstreckte Kreuzungszonen, in denen die links- und rechtsgängigen Helixstränge über Kreuz liegen. Zwischen diesen in Längsrichtung des Rundgeflechts verlaufenden Kreuzungszonen sind ebenfalls in Längsrichtung ausgerichtete Wandungskammern gebildet, die jeweils zwischen den linksgängigen und rechtsgängigen Helixsträngen liegen. In Umfangsrichtung liegen im Wechsel Wandungskammern nebeneinander, die entweder die rechtsgängigen Helixstränge außen und linksgängigen Helixstränge innen oder aber die linksgängigen Helixstränge außen und die rechtsgängigen Helixstränge innen aufweisen. Durch diese Wandungskammern sind die rechts- und linksgängigen Helixstränge gegenüber einem normalen Rundgeflecht senkrecht zur Wandung des Rundgeflechts weiter voneinander beabstandet. Der Matrixwerkstoff, in den das Rundgeflecht eingebettet ist, begrenzt die Wandungskammern außenseitig und innenseitig und weist eine definierte Phasengrenze zu den Wandungskammern auf. Die Wandungskammern selbst haben vorzugsweise einen runden oder elliptischen Querschnitt. Bei dem genannten stabförmigen Faserverbundwerkstoff kann es zweckmäßig sein, in bekannter Art und Weise eine Kernröhre im Inneren des Rundgeflechts vorzusehen. Die Kernröhre kann auch gefüllt sein, beispielsweise zum Zwecke der Stabilisierung. So kommt je nach Anwendungsfall zum Beispiel in Frage, den Innenraum des Rundgeflechts vollständig mit gegebenenfalls aufgeschäumten Matrixwerkstoff und gegebenenfalls weiterem Fasermaterial zu füllen, so dass lediglich die Wandungskammern frei von Fasermaterial und Matrixwerkstoff des Rundgeflechts sind.

Der genannte Faserverbundwerkstoff hat eine hohe Torsionsfestigkeit und -steifigkeit und ist darüber hinaus sehr knickstabil und in hohem Maße auf Druck belastbar. Die Eigenschaften des Faserverbundwerkstoffes können gegebenenfalls durch Füllungen oder Einlagen in die Wandungskammern noch anwendungsgerecht verbessert werden. Dies kann soweit gehen, dass die Stabilität des Faserverbundmaterials im wesentlichen durch die Einlagen oder Füllungen erzeugt wird und das Rundgeflecht im wesentlichen nur noch der Stabilisierung dieser Einlagen gegen Knicken und/oder Änderung der Lage dient. Daneben können die Wandungskammern auch als Transportwege für Flüssigkeiten und Gase dienen oder auch Leitungen zum Transport von elektrischer Energie oder elektrischen oder optischen Signalen aufnehmen.

In einer Weiterbildung des Faserverbundwerkstoffes verlaufen innerhalb und/oder außerhalb des Rundgeflechts ebenfalls in den Matrixwerkstoff eingebettete Faserlängsstränge im wesentlichen in Längsrichtung des stabförmigen Faserverbundwerkstoffes.

Diese Faserlängsstränge sind insbesondere geeignet, das Volumen des Matrixwerkstoffes gering zu halten und in Längsrichtung wirkende Zugkräfte aufzunehmen. Die Faserlängsstränge können aus dem gleichen oder einem anderen Fasermaterial als das Rundgeflecht bestehen. Besonders bevorzugt ist es, wenn die Faserlängsstränge in sich in Längsrichtung erstreckende Zwickelaussparungen eingefügt sind, die sich innerhalb und außerhalb des Rundgeflechts im Bereich der Kreuzungsstellen zwischen links- und rechtsgängigen Helixsträngen ergeben.

In Weiterbildung des Faserverbundwerkstoffes ist mindestens eine, vorzugsweise alle, Wandungskammern gefüllt.

Eine solche Füllung kann die Eigenschaften des stabförmigen Faserverbundwerkstoffes positiv beeinflussen. Neben der Füllung aller Wandungskammern kann es auch zweckmäßig sein, nur einige der Wandungskammern zur Verbesserung der Materialeigenschaften zu füllen und andere, beispielsweise für den Gastransport, ungefüllt zu belassen. Die Füllung der Wandungskammern wird vorzugsweise schon während des Herstellungsvorgangs in die Wandungskammer- eingebracht. Je nach Anwendungsfall kann es zweckmäßig sein, eine Füllung in den Wandungskammern vorzusehen, die dort als vorgefertigte Einlage mit definierter Phasengrenze eingelegt wird und die je nach Art der Einbringung bündig mit dem Matrixwerkstoff abschließt oder nur lose in der Wandungskammer liegt. Alternativ dazu sind auch Füllungen zweckmäßig, die insbesondere in flüssiger Form in die Wandungskammern eingefüllt werden und erst dort aushärten oder verfestigen.

In Weiterbildung des Faserverbundwerkstoffes ist in mindestens eine der Wandungskammern eine Leitung, insbesondere eine elektrische Leitung oder ein Lichtleiter, eingelegt.

Eine Verwendung der Wandungskammern zur Übertragung von elektrischer Energie oder elektrischen oder optischen Signalen wird insbesondere dann als zweckmäßig angesehen, wenn eine Kernröhre des Faserverbundwerkstoffes den Transport von beispielsweise Fluiden dienen soll und daher dort keine Leitungen aufgenommen werden können. Die Leitungen können entweder so ausgebildet sein, dass sie die Wandungskammer vollständig ausfüllen und bündig mit dem Matrixwerkstoff abschließen oder dass sie lediglich eingelegt sind und in Längsrichtung des Faserverbundwerkstoffes beweglich bleiben. Die eingelegte Leitung kann eine Isolationsschicht aufweisen, je nach verwendetem Matrixwerkstoff können jedoch auch direkt eingefügte Leiter ohne Isolationsschicht Verwendung finden. Zweckmäßig kann es darüber hinaus auch sein, wenn mehrere Leitungen gemeinsam in eine zuvor ausgehärtete Wandungskammer eingelegt werden.

Vorzugsweise ist mindestens eine Wandungskammer als Leitung zum Transport von Fluiden ausgebildet oder es ist in mindestens eine der Wandungskammern eine Leitung zum Transport von Fluiden eingelegt.

Zu diesem Zweck kann in der Wandungskammer eine separate Leitung vorgesehen sein, die vorzugsweise während des Herstellungsvorgangs des Faserverbundwerkstoffes eingebracht wird, oder aber die Wandungskammer wird selbst unmittelbar als Leitung verwendet, deren Wandung vom Matrixwerkstoff des Faserverbundwerkstoffes begrenzt ist. Bei der Verwendung einer separaten Leitung können sowohl eine die Wandungskammer vollständig ausfüllende als auch eine zumindest begrenzt in Längsrichtung bewegbare Leitung zweckmäßig sein.

In einer Weiterbildung des Faserverbundwerkstoffes ist in mindestens einer der Wandungskammern, vorzugsweise in alle Wandungskammern, eine die Wandungskammer ausfüllende Stabilisierungseinlage mit definierter Außenfläche, insbesondere eine Stabilisierungsstange, eingelegt.

Eine solche Stabilisierungseinlage füllt die Wandungskammer jeweils vorzugsweise vollständig aus und weist eine gemeinsame Phasengrenze mit dem angrenzenden Matrixwerkstoff auf. Als besonders zweckmäßig werden Stangen aus in ein Bindemittel eingebetteten Fasern, insbesondere Kohlenstofffasern angesehen. Durch die Stabilisierungseinlagen kann der Faserverbundwerkstoff gezielt bezüglich seiner Eigenschaften an spezielle Anforderungen angepasst werden, wobei insbesondere Zug- und Druckbelastungen gut aufgenommen werden können. Die Stabilisierungseinlagen können darüber hinaus auch so ausgebildet sein, dass sie einen Großteil der auftretenden Belastungen aufnehmen, wobei durch sie dadurch, dass sie in das Rundgeflecht eingeflochten sind, sicher in ihrer Position gehalten werden, ohne dass die Gefahr des Ausknickens oder der Lageveränderung besteht. Die Stabilisierungseinlagen, insbesondere die Stabilisierungsstangen, können mit definierten vorbestimmten Eigenschaften vorgefertigt sein.

In Weiterbildung des Faserverbundwerkstoffes sind die die Wandungskammern bzw. ihr jeweiliger Inhalt von der Matrix trennenden Phasengrenzen glatt und die Wandungskammern weisen einen einheitlichen Querschnitt in Längsrichtung auf.

Derartig gestaltete Wandungskammern sind vergleichsweise einfach herzustellen, indem bei einem kontinuierlichen Herstellungsprozess ein Formkern im Bereich der Wandungskammern in das Rundgeflecht eingebracht wird, der je nach Anwendungsfall nach Verfestigen der Matrix im Faserverbundwerkstoff verbleibt oder aus diesem herausgezogen oder anderweitig entfernt, insbesondere herausgelöst wird.

In Weiterbildung des Faserverbundwerkstoffes kann innerhalb und/oder außerhalb des röhrenförmigen Rundgeflechts ein weiteres röhrenförmiges Rundgeflecht vorgesehen und in den Matrixwerkstoff eingebettet sein, welches vorzugsweise ebenfalls im Bereich der Wandung zwischen rechtsgängigen und linksgängigen Strängen angeordnete und in Längsrichtung der röhrenförmigen Rundgeflechts ausgerichtete Wandungskammern aufweist, die vom Matrixwerkstoff durch eine Phasengrenze begrenzt sind.

Ein solcher Faserverbundwerkstoff, der mehrere Rundgeflechte, vorzugsweise jeweils mit Wandungskammern, aufweist, verfügt über eine nochmals erhöhte Knickstabilität und Torsionsfestigkeit. Die erhöhte Zahl an Wandungskammern gestattet darüber hinaus eine besonders flexible Anpassung an spezielle Anforderungen, beispielsweise indem die Wandungskammern des äußeren Rundgeflechts zur Einlage von Stabilisierungseinlagen und die Wandungskammern des inneren Rundgeflechts zur Einlage von durch das äußerer Rundgeflecht besonders gut geschützten Leitungen, insbesondere elektrischen Leitungen oder Lichtwellenleitern, verwendet werden.

Die Erfindung betrifft weiterhin ein Verfahren zur Herstellung eines stabförmigen Faserverbundwerkstoffs mit einem röhrenförmigen Rundgeflecht aus links- und rechtsläufgen Helixsträngen und einer die Helixstränge einbettenden Matrix, wobei dieses Verfahren vorzugsweise zur Herstellung eines erfindungsgemäßen Faserverbundwerkstoffs dient. Bei diesem Verfahren wird das röhrenförmige Rundgeflecht um im Bereich der Rundgeflechtswandung angeordnete stabförmige Wandungskammerbildner als Formkerne zur Ausbildung einer definierten Phasengrenze geflochten, wobei die Wandungskammerbildner im Bereich zwischen den sich kreuzenden links- und rechtsläufigen Helixsträngen eingeflochten werden und anschließend der Matrixwerkstoff zur Bildung dieser Helixstränge de Rundgeflechts einbettenden Matrix und zur Ausbildung der definierten Phasengrenze in das Rundgeflecht eingebracht wird. Dabei bleiben die Wandungskammerbildner so lange in den Wandungskammern, bis der Matrixwerkstoff zumindest teilweise verfestigt oder ausgehärtet ist. Das Verfahren eignet sich zur kontinuierlichen Durchführung.

Das erfindungsgemäße Verfahren beginnt mit einem an sich bekannten kontinuierlichen Flechtvorgang, wobei die dafür verwendeten Helixstränge um die Wandungskammerbildner herum geflochten werden, so dass diese eine Beabstandung der innenliegenden rechtsläufigen und außenliegenden linksläufigen bzw. innenliegenden linksläufigen und außenliegenden rechtsläufigen Helixstränge bewirken. Durch das Einbringen des Matrixwerkstoffes, der die Helixstränge einbettet und verfestigt, werden die Wandungskammern in einer bleibende Form gebracht und es werden die definierten Phasengrenzen ausgebildet, die auch erhalten bleiben, wenn die Wandungskammerbildner nach zumindest teilweiser Verfestigung oder Aushärtung des Matrixwerkstoffes im Zuge des kontinuierlichen Vorschubs des erzeugten Faserverbundwerkstoffs aus den Wandungskammern ausrücken.

Erfindungsgemäß sind die Wandungskammerbildner zur Bildung von freien Wandungskammern stationär ausgebildet und rücken kontinuierlich im Bereich der zumindest teilweise ausgehärteten oder verfestigten Matrix aus den gebildeten Wandungskammern aus.

Die Wandungskammerbildner dienen also nur der Formgebung der Wandungskammern und der Ausbildung der definierten Phasengrenzen, ohne in den Wandungskammern zu verbleiben. Auch solche Wandungskammerbildner sind vorzugsweise im Bereich der Flügelräder der Flechtmaschine zur Herstellung des Rundgeflechts angeordnet und erstrecken sich in Transportrichtung des Faserverbundwerkstoffes bis in einen Bereich hinter einem Zuführungsbereich für das Matrixmaterial, in dem das Matrixmaterial zumindest so weit verfestigt ist, dass die Wandungskammern auch nach Ausrücken der Wandungskammerbildner stabil sind. Dieses Verfahren ist technisch nicht sehr aufwendig und kann unter nur geringfügigen Modifikationen mit handelsüblichen Flechtmaschinen durchgeführt werden. Zu diesem Zweck werden die diese Flechtmaschinen beispielsweise im Bereich ihrer Flügelräder mit vorzugsweise gestängeartigen Wandungskammerbildnern ausgerüstet, die sich mindestens bis in eine Vorrichtung zur Einbringung der Matrix in die Wandung erstrecken.

In Weiterbildung des Herstellungsverfahrens wird während des kontinuierlichen Ausrückens der Wandungskammerbildner eine Wandungs-kammerfüllung in die von zumindest teilweise ausgehärtetem Matrixwerkstoff umgebende Wandungskammer eingebracht. Die Zuführung der Wandungskammerfüllung erfolgt dabei vorzugsweise durch die stationären Wandungskammerbildner, die zu diesem Zweck röhrenartig ausgebildet sind. Eine Vorrichtung zum Einbringen der Wandungskammerfüllung in die Wandungskammerbildner ist vorzugsweise Teil der Flechtvorrichtung. Die Zuführung erfolgt abhängig von der Vorschubgeschwindigkeit des erzeugten Faserverbundwerkstoffes.

In einer Weiterbildung des Herstellungsverfahrens ist die Füllung als vorgefertigte feste Endloseinlage ausgebildet.

Diese kann beispielsweise auf Rollen im Bereich der Flechtvorrichtung gelagert und kontinuierlich zugeführt werden. Je nach Anwendungszweck können diese Einlagen Transportzwecke, beispielsweise für Gase und Flüssigkeiten oder auch für Elektrizität oder elektrische Signale, erfüllen. Solche Endloseinlagen sind im Vergleich zu Einlagen, die nicht durch stationäre Wandungskammerbildner eingeführt werden sondern selbst als verlorene Wandungskammerbildner ausgebildet sind, im eingelegten Zustand auch noch nach Verfestigung des Matrixwerkstoffes in Längsrichtung des Faserverbundwerkstoffes beweglich, was vorteilhaft sein kann. Dadurch wird beispielsweise die Gefahr vermieden, dass die Einlage verletzt wird, wenn der fertige Faserverbundwerkstoff im Zuge seiner Verwendung in Kurven mit engen Radien gedrückt wird.

In Weiterbildung des Herstellungsverfahrens wird die Füllung als fließfähiges Medium, beispielsweise als Schaumstoff, eingebracht, das nach dem Einbringen in der Wandungskammer verfestigt, insbesondere aushärtet.

Zu diesem Zweck wird das fließfähige Medium vorzugsweise druckbeaufschlagt durch die Wandungskammerbildner der Wandungskammer zugeführt, die es vollständig ausfüllt und in der es anschließend fest wird. Eine solche Füllung kann in verschiedener Art und Weist die Eigenschaften des Faserverbundwerkstoffes verbessern.

In einer Weiterbildung des Herstellungsverfahrens kann das Rundgeflecht vor der Verfestigung oder Aushärtung des Matrixwerkstoffs, insbesondere vor der Einbettung in den Matrixwerkstoff verformt werden.

Hierdurch ist es möglich, dem mittels des Verfahren hergestellten Faserverbundwerkstoff eine Form, insbesondere eine Querschnittsform, zu verleihen, die bei der ursprünglichen Erzeugung des Rundgeflechts nicht oder nur schwer herzustellen ist. Die Verformung kann durch von außen oder von innen auf das Rundgeflecht wirkende Kräfte verursacht werden. Die Verformung kann auch derart erfolgen, dass der Faserverbundwerkstoff in seiner Längsrichtung beeinflusst wird, beispielsweise durch leicht schraubenförmig ausgebildete Nebenkammerbildner, die schraubenförmige Wandungskammern zur Folge haben.

Als besonders vorteilhaft wird eine Weiterbildung angesehen, bei der die Verformung hinsichtlich des Querschnitts stattfindet, insbesondere durch eine von den Wandungskammerbildnern und/oder von begrenzenden Außen- oder Innenflächen einer Form ausgehenden Krafteinwirkung.

Die Wandungskammerbildner können zu diesem Zweck eine sich in Vorschubsrichtung des Faserverbundwerkstoffes ändernde Anordnung aufweisen. Zweckmäßig kann es beispielsweise sein, wenn die Wandungskammerbildner in einem Bereich, in dem das Rundgeflecht erzeugt wird, auf einem Kreisumfang angeordnet sind, und im weiteren Verlauf beispielsweise eine rechteckige Anordnung oder eine Anordnung in Form des Querschnitts eines C-, T-, L- oder LZ-Träger einnehmen, so dass das Rundgeflecht im Zuge des kontinuierlichen Vorschubs in diese Form gedrückt wird, bevor oder während der Matrixwerkstoff eingebracht wird oder verfestigt.

In Weiterbildung des Herstellungsverfahrens werden mindestens zwei ineinander geführte Rundgeflechte und der Matrixwerkstoff zu einem stabförmigen Faserverbundwerkstoff zusammengefügt, wobei die Wandungskammerbildner zur Ausbildung der definierten Phasengrenze in mindestens eines der Rundgeflechte eingeflochten werden.

Ein solches Verfahren kann ein- oder mehrstufig erfolgen. Beim einstufigen Verfahren werden gleichzeitig zwei Rundgeflechte hergestellt, von denen mindestens eines, vorzugsweise beide, durch Wandungskammerbildner mit Wandungskammern versehen werden. Die beiden Rundgeflechte werden vorzugsweise mit einem gemeinsamen Matrixwerkstoff fest miteinander verbunden.

In einer anderen Weiterbildung des Herstellungsverfahrens wird dieses mehrstufig ausgeführt, wobei ein in der ersten Stufe erzeugter stabförmiger Faserverbundwerkstoff mit einem ersten Rundgeflecht in einer zweiten Stufe mit einem zweiten Rundgeflecht umgeben und mit diesem durch den Matrixwerkstoff verbunden wird.

Vorzugsweise finden dabei identische Matrixwerkstoffe und Fasermaterialien Verwendung. Im Falle von beispielsweise verschiedenartigen zu erwartenden Belastungen, die auf der Außenseite des Faserverbundwerkstoffes und an der Wandung einer Kernröhre wirken, kann es auch zweckmäßig sein, für die zweite Stufe und damit die äußere Schicht des erzeugten Faserverbundwerkstoffes einen zweiten Matrixwerkstoff und/oder ein zweites Fasermaterial zu verwenden, die sich jeweils von dem in der ersten Stufe verwendeten Werkstoff bzw. Material unterscheiden.

Die Erfindung betrifft auch eine Vorrichtung zur kontinuierlichen Herstellung eines stabförmigen Faserverbundwerkstoffs mit einer Flechtvorrichtung, die zum Flechten eines Rundgeflechts ausgebildet ist, eine Aufbringungsvorrichtung zur Aufbringung eines Matrixwerkstoffes auf Helixstränge des Rundgeflechts und einer Aushärtungsvorrichtung zum Aushärten des Matrixwerkstoffes, wobei die Flechtvorrichtung stabförmige Wandungskammerbildner mit definierter zylindrischer Außenfläche aufweist, die so angeordnet sind, dass sie in die Wandung des Rundgeflechts eingeflochten werden, und die sich durch die Aufbringungsvorrichtung hindurch bis in einen Bereich der Aushärtungsvorrichtung erstrecken, indem der Matrixwerkstoff zumindest teilweise ausgehärtet oder verfestigt ist.

Bei der Flechtvorrichtung handelt es sich um eine an und für sich übliche Flechtvorrichtung zur Herstellung von Rundgeflechten, wobei im Bereich von Klöppeln der Flechtvorrichtung, vorzugsweise dort, wo Flügelräder der Flechtvorrichtung vorgesehen sind, Wandungskammerbildner an der Flechtvorrichtung angebracht sind. Diese erstrecken sich im wesentlichen in Transportrichtung des Faserverbundwerkstoffes und dienen der Umflechtung mit den Helixsträngen des Rundgeflechts. Sie erstrecken sich durch die Aufbringungsvorrichtung hindurch, in der das Rundgeflecht in den Matrixwerkstoff eingebettet wird, wobei sie die Wandungskammern definieren, die vom Einbringen von Matrixwerkstoff ausgenommen sind und dabei die definierte Phasengrenze ausbilden. Die Art der Matrix kann in vielerlei Hinsicht auf verschiedene Anforderung angepasst werden, beispielsweise durch die Wahl des Matrixwerkstoffes oder durch Aufschäumung, um die Dichte des Materials zu verringern. Die Wandungskammerbildner enden erst in oder hinter der Aushärtungsvorrichtung, in der der Matrixwerkstoff ausgehärtet oder verfestigt wird. Wenn im Zuge des kontinuierlichen Vorschubs des hergestellten Faserverbundwerkstoffs die Wandungskammerbildner somit kontinuierlich aus den Wandungskammern ausgerückt werden, bleiben die Wandungskammern aufgrund der Aushärtung bzw. Verfestigung stabil bestehen. Die Wandungskammern geben dem mit einer solchen Vorrichtung hergestellten Faserverbundwerkstoff ein hohes Maß an Stabilität bei geringer Masse und gestatten darüber hinaus die Übernahme spezieller Funktionen, beispielsweise im Bereich des Fluid- oder Energietransports. Eine besondere Ausgestaltung ist bei der Verwendung von Hybridgarnen zweckmäßig. Diese bestehen aus Verstärkungsfasern einer-seits und Matrixflamenten, beispielsweise Thermoplastfilamenten, andererseits. Bei diesen Hybridgarnen werden das Fasermaterial und der Matrixwerkstoff gemeinsam mittels der Flechtvorrichtung verflochten. Die Aufgabe der Aufbringungsvorrichtung besteht in diesem Fall nicht in der Zuführung der Matrixwerkstoffes, sondern lediglich in seiner Erwärmung, mit der die homogene Verteilung auf den Fasern einhergeht. Die Aushärtungsvorrichtung ist in diesem Fall als Abkühlvorrichtung ausgebildet.

In Weiterbildung der Herstellungsvorrichtung sind die Aufbringungsvorrichtung zur Aufbringung des Matrixwerkstoffes und die Aushärtungsvorrichtung als einheitliche Vorrichtung ausgebildet.

Bei der Aushärtungsvorrichtung handelt es sich vorzugsweise lediglich um eine Aushärtungs- und Formungsstrecke, im Verlauf derer der Matrixwerkstoff an der Außenseite geführt wird und im Verlauf derer der Matrixwerkstoff verfestigt wird. Je nach Ausführungsform kann zusätzlich ein Formkern im Inneren vorgesehen sein, der während der Verfestigung eine lichte Kernröhre definiert.

In einer Weiterbildung weist die Herstellungsvorrichtung eine Einrichtung zur Umformung des Rundgeflechts nach dessen Erzeugung auf.

Eine derartige Ausprägung gestattet eine besonders flexible Anpassung des Rundgeflechts und des Faserverbundwerkstoffs an anwendungsspezifische Forderungen. Die Vorrichtung weist zu diesem Zweck eine Teilvorrichtung auf, die eine gezielte Krafteinwirkung auf das Rundgeflecht gestattet. Dies kann ein Formkern innerhalb des Rundgeflechts sein, dessen Querschnittsfläche in Vorschubrichtung variiert ist, indem er beispielsweise im Bereich der Flechtvorrichtung eine runden Querschnitt aufweist, dessen Form sich in Vorschubsrichtung hin beispielsweise zu einem rechteckigen entwickelt. Zweckmäßig kann stattdessen oder zusätzlich auch eine außerhalb des Rundgeflechts angeordnete Formvorrichtung sein, die von außen im Zuge des kontinuierlichen Vorschubs des Rundgeflechts dieses in eine wunschgemäße Form drückt. Die Kombination aus einem formgebenden Formkern innerhalb des Rundgeflechts und einer formgebenden Formvorrichtung außerhalb des Rundgeflechts gestattet besonders flexible Formgebungen des Rundgeflechts mit Querschnitten, die konkave und konvexe Wandungsbereiche umfassen.

In einer Weiterbildung der Herstellungsvorrichtung sind die Wandungskammerbildner so geformt, dass ein durch die Wandungskammerbildner gebildetes Muster sich hinter einem Bereich, in dem das Rundgeflecht erzeugt wird, gegenüber einem ursprünglichen Muster so ändert, dass das erzeugte Rundgeflecht bezüglich seiner Form, insbesondere bezüglich seines Querschnitts, kontinuierlich geändert wird.

Diese Weiterbildung erlaubt es, ohne zusätzliche innerhalb oder außerhalb des Rundgeflechts angeordnete Formvorrichtungen eine kontinuierliche Verformung des Rundgeflechts zu erzielen. Während das Rundgeflecht in Vorschubsrichtung weitertransportiert wird, führt die sich ebenfalls in Vorschubsrichtung ändernde Anordnung der Wandungskammerbildner zu einer Verlagerung der Wandungskammern des Rundgeflechts und in Folge dessen zu einer kontinuierlichen Veränderung der Form des Rundgeflechts, beispielsweise bezüglich des Querschnitts ausgehend von einem kreisrunden Rundgeflecht hin zu einem Rundgeflecht in Form eines T-Trägers. Zweckmäßig kann es auch sein, über gleichsinnig wendelförmig ausgebildete und angeordnete Wandungskammerbildner eine schraubenförmige Form der Wandungskammern zu erzielen.

In Weiterbildung der Herstellungsvorrichtung sind die Wandungskammerbildner röhrenartig hohl ausgebildet.

Eine solche Ausbildung gestattet es, den Wandungskammern während der Herstellung des Faserverbundwerkstoffes eine Füllung zuzuführen.

In Weiterbildung der Herstellungsvorrichtung sind die Wandungskammerbildner zum Zuführen einer festen Einlage in die durch die Wandungskammerbildner erzeugten Wandungskammern ausgebildet.

Die feste Einlage wird vorzugsweise im Bereich der Flechtvorrichtung auf Spindeln oder in Form von Stangenware vorgehalten und kontinuierlich durch die Wandungskammerbildner hindurch in die Wandungskammern zugeführt. Zweckmäßige Einlagen können sowohl solche sein, die der Stabilität des Faserverbundwerkstoffes dienen, als auch solche, die spezielle Funktionen im Bereich des Fluid- oder Elektrizitätstransports übernehmen.

In Weiterbildung der Herstellungsvorrichtung sind die Wandungskammerbildner zum Zuführen eines druckbeaufschlagten fließfähigen Mediums in die durch die Wandungskammerbildner erzeugten Wandungskammern ausgebildet, wobei das Medium nach Einbringung in die Wandungskammern verfestigt oder aushärtet.

Hierdurch ist es möglich, die Materialeigenschaften des Faserverbundwerkstoffes gezielt durch die Zuführung einer Füllung in die Wandungskammer positiv zu beeinflussen.

Ausführungsbeispiele der Erfindung sind in den Zeichnungen schematisch dargestellt und werden im folgenden näher erläutert. In den Zeichnungen zeigen:
- Fig. 1 bis 4: verschiedene Ausführungsformen von erfindungsgemäß hergestellten Faserverbundwerkstoffen,
- Fig. 5 bis 7: verschiedene Ausführungsformen von erfindungsgemäßen Vorrichtungen zur Herstellung eines stabförmigen Faserverbundwerkstoffes,
- Fig. 8a: Abschnitte von Wandungskammerbildner einer erfindungsgemäßen Vorrichtung zur Herstellung eines stabförmigen Faserverbundwerkstoffes mit trapezförmigem Querschnitt.
- Fig.8b bis 8e: die in Fig. 8a dargestellten Wandungskammerbildner in einer Schnittansicht an verschiedenen Positionen in Vorschubsrichtung und
- Fig.8f: einen erfindungsgemäß hergestellten Faserverbundwerkstoff, dessen trapezförmiger Querschnitt durch in den Fig. 8a bis 8e dargestellten Wandungskammerbildner bedingt ist

Bei den verschiedenen Ausführungsformen des Faserverbundwerkstoffes und den verschiedenen Ausführungsformen der Herstellungsvorrichtung stimmen die zweite und dritte Stelle der Bezugszeichen für miteinander vergleichbare Komponenten jeweils miteinander überein.

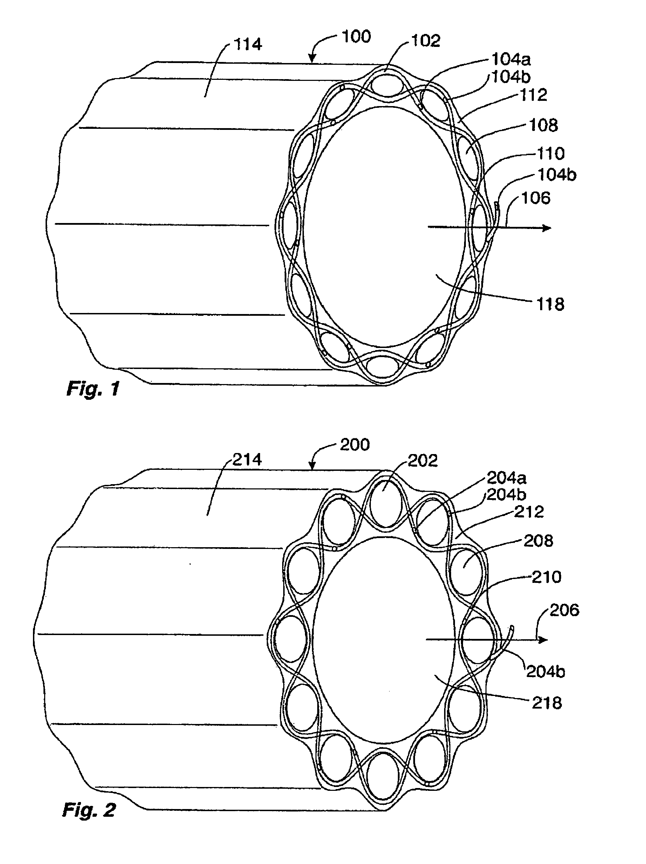

Die in den Ausführungsbeispielen von Fig. 1 bis 4 dargestellten Profile des erfindungsgemäß hergestellten Faserverbundwerkstoffs können bzgl. ihrer Querschnittsmaße sehr verschieden ausgestaltet sein. Die Profile können einen Durchmesser von wenigen Millimetern und eine Querschnittsfläche von wenigen Quadratmillimetern aufweisen. Für die Herstellung von Bauteilen, beispielsweise für Flugzeuge, sind jedoch auch deutlich größere Durchmesser bis in den Bereich von mehreren Dezimetern denkbar. Besonders bevorzugte Ausführungsformen haben Durchmesser im Bereich weniger Zentimeter, beispielsweise einen Durchmesser von 2 Zentimetern bei einer Wandungsdicke im Bereich der Wandungskammern von 5 mm und einer lichten Wandungskammerquerschnittsfläche von etwa 10 Quadratmillimeter, was bei kreisförmigen Querschnitten der Wandungskammern einem lichten Wandungskammerdurchmesser von etwa 3,5 mm entspricht.

Die bei den Ausführungsbeispielen dargestellten Rundgeflechte weisen jeweils einen Steigungswinkel der Helixstränge bezogen auf Längs- und Umfangsrichtung von in etwa 10° bis 20° auf. Abhängig vom Anwendungszweck des Faserverbundwerkstoffs und abhängig von der Zahl an Helixsträngen und den Querschnittsmaßen des Gesamtprofils sowie der Wandungskammern können jedoch auch geringere und größere Steigungswinkel zweckmäßig sein. Dabei ist bei höheren Anforderungen an die Biegefestigkeit eine geringere Steigung und bei höheren Anforderungen an die Torsionsfestigkeit eine höhere Steigung bis zwischen 50° und 60° zweckmäßig.

Fig. 1 und Fig. 2 zeigen sehr einfache Ausgestaltungen des erfindungsgemäß hergestellten profilartigen Faserverbundwerkstoffes. Die Faserkomponente dieser Faserverbundwerkstoffe 100, 200 wird durch Rundgeflechte 102, 202 gebildet, welche aus helixförmig verlaufenden Fasersträngen 104a, 104b, 204a, 204b bestehen. Von diesen Fasersträngen 104a, 104b, 204a, 204b sind in den Rundgeflechten 100, 200 jeweils insgesamt zwölf Stück vorgesehen, von denen wiederum jeweils sechs Faserstränge 104a, 204a in der Perspektive der Fig. 1 und 2 in Vorschubsrichtung 106, 206 im Uhrzeigersinn und von denen jeweils sechs Faserstränge 104b, 204b in der Perspektive der Fig. 1 und 2 in Vorschubsrichtung 106, 206 entgegen dem Uhrzeigersinn helixförmig in den Rundgeflechten 102, 202 verflochten sind. Die Faserstränge 104a, 104b, 204a, 204b sind dabei derart verflochten, dass jeweils insgesamt zwölf Wandungskammern 108, 208 in der Wandung der Rundgeflechts 102, 202 ausgespart sind. Diese Wandungskammern 108, 208 sind in der Wandung in Umfangsrichtung jeweils zwischen Kreuzungszonen 110, 210 angeordnet, wobei in diesen Kreuzungszonen 110, 210 die linksgängigen Faserstränge 104a, 204a und die rechtsgängigen Faserstränge 104b, 204b in einer Draufsicht in Richtung der Vorschubsrichtung 106, 206 übereinander liegen. Die Wandungskammern der beiden Rundgeflechte 102, 202 unterscheiden sich voneinander durch ihre Querschnittsform: Die Wandungskammern 108 im Rundgeflecht 102 haben kreisförmige Querschnittsflächen, während die Querschnittsflächen der Wandungskammern 208 des Rundgeflechts 202 elliptisch geformt sind. Die Rundgeflechte 102, 202 sind jeweils umgeben von einem Matrixwerkstoff 112, 212, der eine Außenwandung 114, 214 der Faserverbundwerkstoffe 100, 200 bildet. Innerhalb der Faserverbundwerkstoffe 100, 200 sind jeweils die Wandungskammern 108, 208 sowie jeweils eine Kernröhre 118, 218 sowohl von Fasersträngen als auch von der aus dem Matrixwerkstoff gebildeten Matrix 112, 212 frei. Die Matrix 112, 212 ist in dem in den Fig. 1 und 2 dargestellten Zustand ausgehärtet, so dass es sich bei dem dargestellten Querschnitt der Wandungskammern 108, 208 um den endgültigen Querschnitt handelt.

Die dargestellten Faserverbundwerkstoffe 100, 200 weisen eine hohe Stabilität auf und vertragen insbesondere hohe Torsionsbelastungen und Biegebelastungen gut. Die freien Wandungskammern 108, 208, die zu einer radialen Beabstandung der jeweils innen- und außenliegenden Wandungsbereiche führen, verhindern das Einknicken der Faserverbundwerkstoffe 100, 200. Je nach Anwendungszweck können die dargestellten Wandungskammern 108, 208 frei bleiben oder mit einer Füllung versehen werden, beispielsweise mit Leitungen oder einer Stabilisierungsfüllung. Wenn die Wandungskammern 108, 208 frei bleiben, können sie beispielsweise für den Transport von Fluiden verwendet werden, was unter anderem die Möglichkeit schafft, eine Kühlung oder Erhitzung eines in der Kernröhre zu transportierenden Mediums zu ermöglichen.

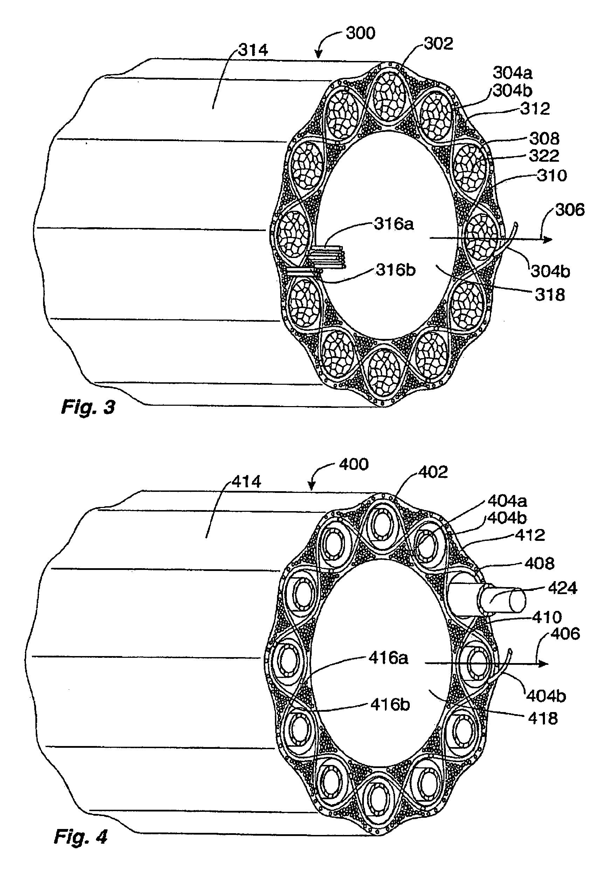

Die Ausführungsform der Fig. 3 unterscheidet sich durch zwei wesentliche Aspekte von der Ausführungsformen der Fig. 1 und 2. Der Faserverbundwerkstoff 300 umfasst als Faserkomponente neben dem Rundgeflecht 302 aus rechts- und linksgängigen Fasersträngen 304a, 304b auch in Vorschubsrichtung 306 ausgerichtete Längsfaserstränge 316a, 316b, die zum Teil 316a innerhalb des Rundgeflechts 302 und zum anderen Teil 316b außerhalb des Rundgeflechts 302 in den Matrixwerkstoff 312 eingebettet sind. Die Längsfaserstränge sind insbesondere in Zwickeln angeordnet, die sich im Bereich der Kreuzungszonen 310 zwischen den links- und rechtsgängigen Fasersträngen 304a, 304b befinden. Der Faserverbundwerkstoff 300 hat dadurch eine erhöhte Stabilität gegen Zugbelastungen. Der zweite wesentliche Unterschied zu den Ausführungsformen der Fig. 1 und 2 liegt in der Füllung aller Wandungskammern 308. Diese sind durch einen verfestigten Schaum 322 ausgefüllt, der dem Faserverbundwerkstoff 300 zusätzliche Stabilität verleiht. Der stabförmige Faserverbundwerkstoff 300, der in Fig. 3 dargestellt ist, erlaubt einen gegebenenfalls erwünschten Transport von Medien daher nur noch durch die Kernröhre 318. Bei nicht dargestellten Ausführungsformen kann jedoch auch nur ein Teil der Wandungskammern mit einem verfestigten Schaum ausgefüllt sein, so dass die anderen Wandungskammern für andere Zwecke verwendet werden können.

Der Faserverbundwerkstoff, der in Fig. 4 dargestellt ist, entspricht bis auf diese Füllung aus ausgehärtetem Schaum 322 grundsätzlich dem Faserverbundwerkstoff der Fig. 3. In die freien Wandungskammern 408 sind jedoch Lichtwellenleiter 424 eingelegt, über die Datensignale transportiert werden können. Durch die Struktur der Faserverbundwerkstoffes 400 mit seiner hohen Knickstabilität ist auch bei hoher Beanspruchung des Faserverbundwerkstoffes ein guter Schutz der Lichtwellenleiter 424 gewährleistet. Durch die Anordnung in verschiedenen Wandungskammern 408 ergibt sich darüber hinaus der Vorteil, dass selbst bei einer Verletzung des Faserverbundwerkstoffes 400 in aller Regel nicht alle Lichtwellenleiter 424 verletzt werden, da diese durch das Rundgeflecht 402 jeweils separat geschützt sind.

Bei weiteren, nicht dargestellten Ausführungsformen von erfindungsgemäß hergestellten Faserverbundwerkstoffen kann die Zahl der Wandungskammern auch von den dargestellten zwölf Wandungskammern abweichen, insbesondere höher sein.

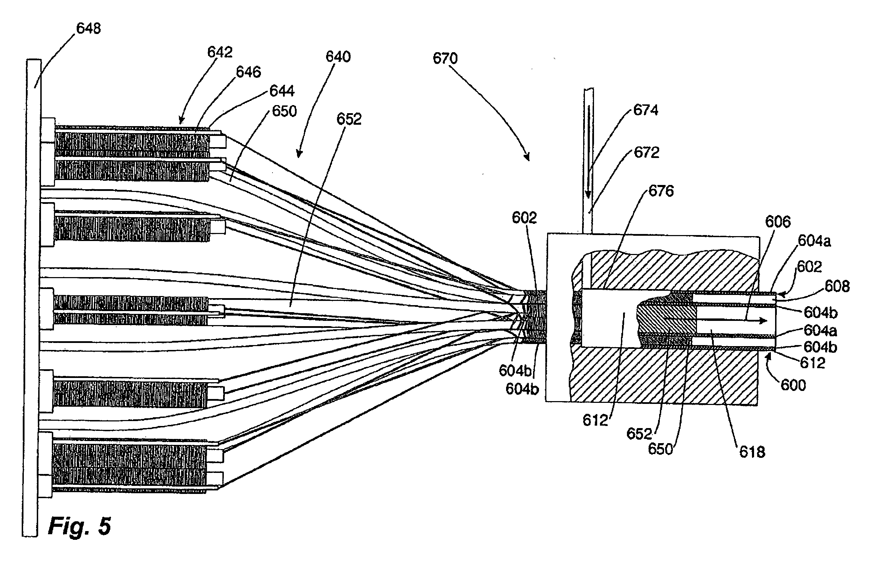

Die Fig. 5 zeigt eine erste Ausführungsform einer erfindungsgemäßen Vorrichtung zur Herstellung eines Faserverbundwerkstoffes 600, beispielsweise zur Herstellung eines Faserverbundwerkstoffes in der Art des in Fig. 2 dargestellten Faserverbundwerkstoffes 200. Die Vorrichtung weist zwei Hauptkomponenten 640, 670 auf, von denen die erste Hauptkomponente eine Flechtvorrichtung 640 ist. Die zweite Vorrichtung ist eine kombinierte Aufbringungs- und Aushärtungsvorrichtung 670, in der ein Rundgeflecht 602, welches durch die Flechtvorrichtung 640 erzeugt wird, mit einem Matrixwerkstoff 612 versehen wird, und in welcher der Matrixwerkstoff 612 anschließend aushärtet.

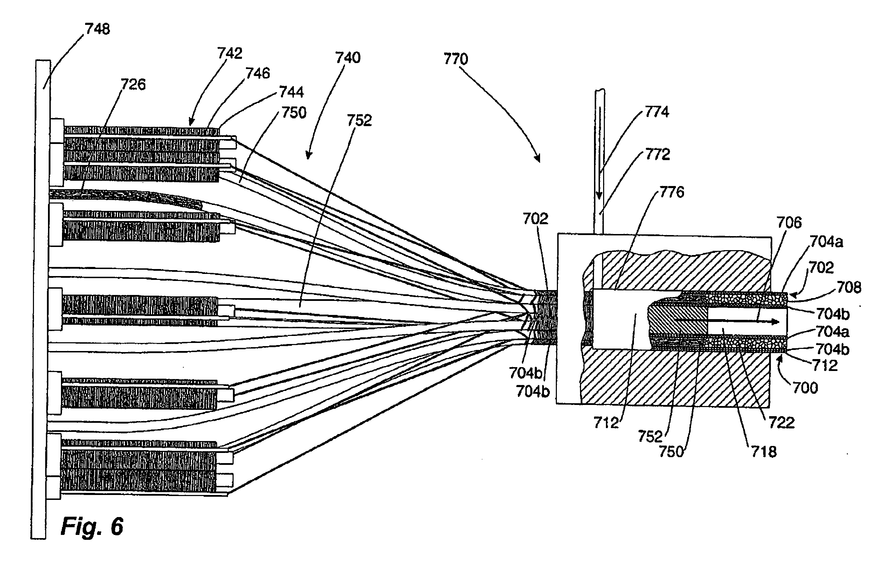

Zur Erzeugung des Rundgeflechts 602 weist die Flechtvorrichtung 640 in an sich herkömmlicher Art und Weise insgesamt zwölf Klöppel 642 auf, die jeweils über eine Faserspindel 644 und einen Abspularm 646 verfügen, mittels dessen das Fasermaterial 604 für das Rundgeflecht 602 von den Faserspindeln 644 abgenommen und dem Rundgeflecht 602 zugeführt wird. In aus der Fig. 6 nicht ersichtlicher, bezüglich des Prinzips jedoch bekannter Art und Weise werden die Klöppel im wesentlichen kreisförmig auf einer Führungsscheibe 648 geführt, wobei jeweils sechs Klöppel 642 sich im wesentlichen im Uhrzeigersinn und sechs Klöppel 642 sich im wesentlichen entgegen dem Uhrzeigersinn bewegen. Die Klöppel wechseln dabei jeweils während ihrer Bewegung zwischen einer inneren und einer äußeren Bahn, so dass es trotz gegenläufiger Bewegung der Klöppel 642 nicht zu einer Kollision der Klöppel 642 kommt. Zwischen den nicht dargestellten Bahnen, in denen die Klöppel 642 geführt werden und die jeweils wechselnd über den Kreisumfang die innere bzw. die äußere Bahn darstellen, sind Wandungskammerbildner 650 auf der Führungsplatte 648 befestigt, die sich mit leicht aufeinander zu gebogener Ausrichtung im wesentlichen in die mit dem Pfeil 606 dargestellte Vorschubsrichtung des Faserverbundwerkstoffes 600 erstrecken. Diese Wandungskammerbildner 650 werden durch die Klöppel 642 derart umfahren, dass sich in dargestellter Art und Weise ein Rundgeflecht 602 bildet, in dem die Wandungskammerbildner 650 von den Fasersträngen 604a, 604b umflochten sind. Dieses Rundgeflecht 602 wird, aufgespannt und geführt auf den Wandungskammerbildnern 650, in die Aufbringungs- und Aushärtungsvorrichtung 670 weitertransportiert, wo es in eine Aufbringungskammer 676 gelangt. Durch eine Zuführungsleitung 672, die in die Aufbringungskammer 676 mündet, wird ein aushärtbarer Matrixwerkstoff in Richtung des Pfeils 674 in die Aufbringungskammer 676 gedrückt, wo er das Rundgeflecht 602 umgibt und dabei die einzelnen Faserstränge 604a, 604b des Rundgeflechts 602 einbettet. Frei von der Matrix 612 bleiben dabei lediglich eine Kernröhre 618, da ein zylindrischer Formkern 652 ausgehend von der Führungsscheibe 648 der Flechtvorrichtung 640 sich bis in die Aufbringungs- und Aushärtungsvorrichtung 670 erstreckt, sowie die Wandungskammern 608, da die Wandungskammerbildner 650 sich ebenfalls bis in die Aufbringungs- und Aushärtungsvorrichtung 670 erstrecken. Beim Weitertransport des Rundgeflechts 602 und der umgebenden Matrix 612 härtet der Matrixwerkstoff 612 aus und der dadurch stabile Faserverbundwerkstoff 600 wird aus dem Bereich der Wandungskammerbildner 650 sowie des Formkerns 652 herausgefördert. Aufgrund des ausgehärteten Matrixwerkstoffes 612 bleiben die Wandungskammern 608 stabil erhalten.

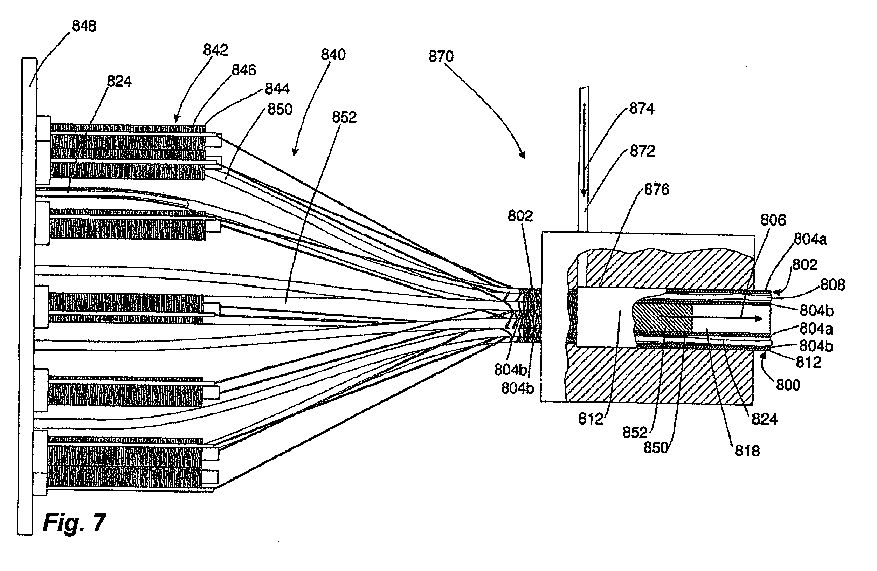

Fig. 6 zeigt eine zweite Ausführungsform einer erfindungsgemäßen Vorrichtung zur Herstellung eines Faserverbundwerkstoffes. Der mit dieser Vorrichtung der Fig. 6 erzeugte Faserverbundwerkstoff 700 hat dabei ähnlich dem in Fig. 3 dargestellten Faserverbundwerkstoff eine zusätzliche Stabilisierung in Form einer Schaumfüllung 722, die wie der Matrixwerkstoff 712 auch im Zuge des Herstellungsvorgangs aushärtet. Diese Schaumfüllung 722 wird in Form eines flüssigen Mediums 726 durch die Wandungskammerbildner 750 unter Druck in die Wandungskammern 708 gedrückt. Die Wandungskammerbildner 750 sind, wie an einem Wandungskammerbildner 750 im Schnitt beispielhaft dargestellt, zu diesem Zweck röhrenartig hohl ausgebildet. Die Fördervorrichtung für das Medium 726 ist in Fig. 7 nicht dargestellt. Sie befindet sich im Bereich der Flechtvorrichtung 740 und fördert das Medium 726 durch die Führungsscheibe 748 hindurch in die Wandungskammerbildner 750.

In Fig. 7 ist eine dritte Ausführungsform einer erfindungsgemäßen Vorrichtung zur Herstellung eines Faserverbundwerkstoffes dargestellt. Diese Vorrichtung entspricht im wesentlichen der in Fig. 7 dargestellten Vorrichtungen. Anders als bei dieser wird zwar auch eine Füllung in die Wandungskammern 808, die durch die Wandungskammerbildner 850 geformt werden, eingebracht, wobei die Zuführung ebenfalls durch die Wandungskammerbildner 850 erfolgt. In diesem Fall handelt es sich bei der zugeführten Einlage jedoch um Lichtwellenleiter 824, die nur lose eingelegt werden. Wie auch bei der Vorrichtung der Fig. 7 ist die Fördereinrichtung nicht dargestellt. Sie befindet sich jedoch ebenfalls im Bereich der Flechtvorrichtung 840, wobei der Lichtwellenleiter 824 anders als das Medium 726 für die Schaumfüllung 722 vor der Einbringung in die Wandungskammern 808 von einer Trommel abgezogen wird.

Bei weiteren, nicht dargestellten Ausführungsformen von erfindungsgemäßen Vorrichtungen zur Herstellung eines Faserverbundwerkstoffes weicht die Zahl der Wandungskammerbildner und/oder der Klöppel von den dargestellten Ausführungsformen ab. So ist insbesondere eine höhere Zahl von Klöppeln zweckmäßig, um ein besonders festes Rundgeflecht zu erzielen. Die Anzahl der Klöppel muss dabei nicht notwendigerweise der Zahl der Wandungskammerbildner entsprechen. So sind beispielsweise Vorrichtungen zweckmäßig, bei denen 24 Klöppel verwendet werden, um insgesamt zwölf Wandungskammerbildner zum umflechten.

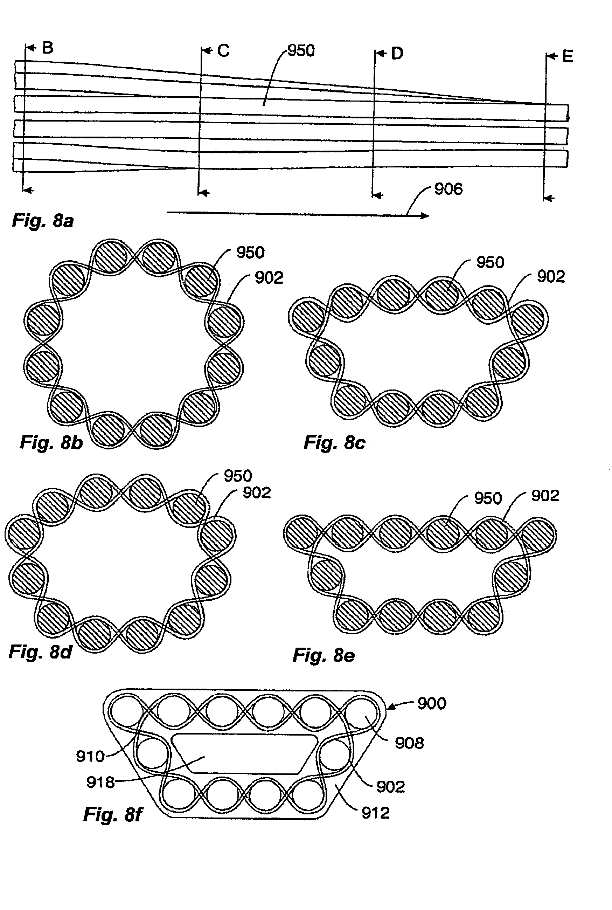

Die Fig. 8a zeigt einen Abschnitt einer Anordnung von Wandungskammerbildern 950, die zur Umformung eines Rundgeflechts 902 in eine Trapezform ausgebildet sind. Ein solche Anordnung von Wandungskammerbildnern kann bei Vorrichtungen, wie sie in den Fig. 5 bis 7 dargestellt sind, Verwendung finden.

Die Wandungskammerbildner 950 sind so geformt, dass sich ihre Anordnung in Vorschubsrichtung 906 stetig ändert. In einem ersten Bereich in Vorschubsrichtung 906 bilden die Wandungskammerbildner eine Anordnung B, die im Querschnitt in Fig. 8b dargestellt ist. Bei dieser Anordnung B sind die Wandungskammerbildner 950 auf einem gemeinsamen Kreisumfang angeordnet. Dies ist auch der Bereich, in dem das Rundgeflecht 902 geflochten wird.

In einem darauf folgenden zweiten Bereich, dargestellt in Fig. 8c, ist die Anordnung schon leicht verändert, wobei die oberen Wandungskammerbildner 950 zum Zentrum hin tendieren und die äußeren Wandungskammerbildner 950 links und rechts weiter nach außen streben. Die daraus resultierende Anordnung C lässt in der Vertikalen schon eine leicht asymmetrische Form erkennen.

In einem dritten Bereich, dargestellte in Fig. 8d, sind die Wandungskammerbildner 950 jeweils noch weiter in ihre jeweils Richtung gegenüber der ursprünglichen Anordnung B ausgelenkt. Diese Anordnung D lässt schon klar eine Trapezform erkennen.

Im letzten Bereich, dargestellt in Fig. 8e, sind die Wandungskammerbildner 950 in ihrer trapezförmigen Zielanordnung E.

Das Rundgeflecht, welches im ersten Bereich erzeugt wird, verformt sich, wie in den Fig. 8b bis 8e dargestellt, im Zuge des Weitertransports in Richtung 906 kontinuierlich und nimmt dabei entsprechend der Ausrichtung der Wandungskammerbildner 950 schlussendlich die Trapezform ein. Mit dieser Trapezform gelangt das Rundgeflecht dann in eine nicht dargestellte kombinierte Aufbringungs- und Aushärtungsvorrichtung, die der der Ausführungsbeispiele der Fig. 5 bis 7 entspricht. Nachdem in der kombinierte Aufbringungsvorrichtung der Matrixwerkstoff eingebracht wurde, die das Rundgeflecht 902 einbettet, und nachdem die Matrix ausgehärtet ist, ist der Faserverbundwerkstoff mit einem Trapezförmigen Querschnitt fertig.

Der fertige Faserverbundwerkstoff ist in der Fig. 8f dargestellt.

Bei nicht dargestellten Faserverbundwerkstoffen, die ähnlich dem in Fig. 8f dargestellten Faserverbundwerkstoff hergestellt sind, werden andere Querschnittsformen wie beispielweise die von C- oder LZ-Trägern erzeugt. Dabei kann es zweckmäßig sein, die Formgebung nicht nur über die Wandungskammerbildner, sondern zusätzlich über eine sich in Vorschubsrichtung ändernde, außerhalb des Rundgeflechts angeordnete Formeinrichtung zu erzielen.

## Patentansprüche

1. Verfahren zur Herstellung eines stabförmigen Faserverbundwerkstoffs (600; 700; 800; 900) mit einem röhrenförmigen Rundgeflecht (602; 702; 802; 902) aus links- und rechtsläufigen Helixsträngen (604a, 604b; 704a, 704b; 804a, 804b) und einer die Helixstränge einbettenden Matrix (612; 712; 812; 912),
wobei
- das röhrenförmige Rundgeflecht (602; 702; 802; 902) um im Bereich der Rundgeflechtswandung angeordnete stabförmige Wandungskammerbildner (650; 750; 850; 950) als Formkerne zur Ausbildung einer definierten Phasengrenze geflochten wird, wobei die Wandungskammerbildner (650; 750; 850; 950) im Bereich zwischen den sich kreuzenden links- und rechtsläufigen Helixsträngen (604a, 604b; 704a, 704b; 804a, 804b) eingeflochten werden und anschließend
- der Matrixwerkstoff zur Bildung der die Helixstränge (604a, 604b; 704a, 704b; 804a, 804b) des Rundgeflechts (602; 702; 802; 902) einbettenden Matrix (612; 712; 812; 912) und zur Ausbildung der definierten Phasengrenze in das Rundgeflecht (602; 702; 802; 902) eingebracht wird,
wobei die Wandungskammerbildner (650; 750; 850; 950)
- mindestens solange in den Wandungskammern (608; 708; 808; 908) bleiben, bis der Matrixwerkstoff (612; 712; 812; 912) zumindest teilweise verfestigt oder ausgehärtet ist und
- zur Bildung von freien Wandungskammern (608; 708; 808; 908), als Teil der Flechtmaschine (640; 740; 840) stationär ausgebildet sind und kontinuierlich im Bereich der zumindest teilweise ausgehärteten oder verfestigten Matrix (612; 712; 812; 912) aus den gebildeten Wandungskammern (608; 708; 808; 908) ausrücken.

2. Verfahren nach Anspruch 1,
**dadurch gekennzeichnet, dass**
während des kontinuierlichen Ausrückens der Wandungskammerbildner (650; 750; 850; 950) eine Wandungskammerfüllung (726, 718; 824) in die von zumindest teilweise ausgehärtetem Matrixwerkstoff (712; 812) umgebene Wandungskammer (708; 808) eingebracht wird.

3. Verfahren nach Anspruch 2,
**dadurch gekennzeichnet, dass**
die Füllung (824) als vorgefertigte feste Endloseinlage (824) ausgebildet ist.

4. Verfahren nach Anspruch 2,
**dadurch gekennzeichnet, dass**
die Füllung (718) als fließfähiges Medium (726) eingebracht wird, das nach dem Einbringen in der Wandungskammer (708) verfestigt.

5. Verfahren nach einem der Ansprüche 1 bis 4,
**dadurch gekennzeichnet, dass**
das Rundgeflecht (902) vor der Verfestigung des Matrixwerkstoffs (912) verformt wird.

6. Verfahren nach Anspruch 5,
**dadurch gekennzeichnet, dass**
die Verformung hinsichtlich des Querschnitts stattfindet.

7. Verfahren nach einem der Ansprüche 1 bis 6,
**dadurch gekennzeichnet, dass**
mindestens zwei ineinander geführte Rundgeflechte und der Matrixwerkstoff zu einem stabförmigen Faserverbundwerkstoff zusammengefügt werden, wobei die Wandungskammerbildner zur Ausbildung der definierten Phasengrenze in mindestens eines der Rundgeflechte eingeflochten werden.

8. Verfahren nach Anspruch 7,
**dadurch gekennzeichnet, dass**
das Verfahren mehrstufig ausgeführt wird, wobei ein in einer erstes Stufe erzeugter stabförmiger Faserverbundwerkstoff mit einem ersten Rundgeflecht in einer zweiten Stufe mit einem zweiten Rundgeflecht umgeben und mit diesem durch den Matrixwerkstoff verbunden wird.

9. Vorrichtung zur kontinuierlichen Herstellung eines stabförmigen Faserverbundwerkstoffs (600; 700; 800; 900) mit
- einer Flechtvorrichtung (640; 740; 840), die zum Flechten eines Rundgeflechts (602; 702; 802; 902) ausgebildet ist,
- einer Aufbringungsvorrichtung zur Aufbringung eines Matrixwerkstoffes (612; 712; 812; 912) auf Helixstränge (604a, 604b; 704a, 704b; 804a, 804b) des Rundgeflechts (602; 702; 802; 902) und
- einer Aushärtungsvorrichtung zum Aushärten des Matrixwerkstoffes (612; 712; 812; 912),
**dadurch gekennzeichnet, dass**
die Flechtvorrichtung (640; 740; 840) stationäre stabförmige Wandungskammerbildner (650; 750; 850, 950) mit definierter zylindrischer Außenfläche aufweist, die so angeordnet sind, dass sie in die Wandung des Rundgeflechts (602; 702; 802; 902) eingeflochten werden, und die sich durch die Aufbringungsvorrichtung (670; 770; 870) hindurch bis in einen Bereich der Aushärtungsvorrichtung (670; 770; 870) erstrecken, in dem der Matrixwerkstoff (612; 712; 812; 912) zumindest teilweise ausgehärtet oder verfestigt ist.

10. Vorrichtung nach Anspruch 9,
**dadurch gekennzeichnet, dass**
die Aufbringungsvorrichtung zur Aufbringung des Matrixwerkstoffes und die Aushärtungsvorrichtung als einheitliche Vorrichtung (670; 770; 870) ausgebildet sind.

11. Vorrichtung nach Anspruch 9 oder 10,
**dadurch gekennzeichnet, dass**
sie eine Einrichtung zur Umformung des Rundgeflechts (902) nach dessen Erzeugung aufweist.

12. Vorrichtung nach Anspruch 11,
**dadurch gekennzeichnet, dass**
die Wandungskammerbildner (950) so geformt sind, dass ein durch die Wandungskammerbildner (950) gebildetes Muster (C, D, E) sich hinter einem Bereich, in dem das Rundgeflecht erzeugt wird, gegenüber dem ursprünglichen Muster (B) so ändert, dass das erzeugte Rundgeflecht (902) während des Vorschubs bezüglich seiner Form kontinuierlich geändert wird.

13. Vorrichtung nach einem der Ansprüch 9 bis 12,
**dadurch gekennzeichnet, dass**
die Wandungskammerbildner (750; 850) röhrenartig hohl ausgebildet sind.

14. Vorrichtung nach Anspruch 13,
**dadurch gekennzeichnet, dass**
die Wandungskammerbildner (850) zum Zuführen einer festen Einlage (824) in die durch die Wandungskammerbildner (850) erzeugten Wandungskammern (808) ausgebildet sind.

15. Vorrichtung nach Anspruch 14,
**dadurch gekennzeichnet, dass**
die Wandungskammerbildner (750) zum Zuführen eines druckbeaufschlagten fließfähigen Mediums (726) in die durch die Wandungskammerbildner (750) erzeugten Wandungskammern (708) ausgebildet sind, welches nach Einbringung in die Wandungskammern (708) verfestigt oder aushärtet.

## Claims

1. Process for producing a rod-shaped fiber composite material (600; 700; 800; 900) having a tube-shaped circular braid (602; 702; 802; 902) formed from left and right-handed helical strands (604a, 604b; 704a, 704b; 804a, 804b) and a matrix (612; 712; 812; 912) embedding the helical strands, wherein
- the tube-shaped circular braid (602; 702; 802; 902) is braided around rod-shaped wall chamber formers (650; 750; 850; 950) disposed in the region of the circular braid wall as mold cores to form a defined phase boundary, the wall chamber formers (650; 750; 850; 950) being braided into the region between crossing left and right-handed helical strands (604a, 604b; 704a, 704b; 804a, 804b), and subsequently
- the matrix material for forming the matrix (612; 712; 812; 912) embedding the helical strands (604a, 604b; 704a, 704b; 804a, 804b) of the circular braid (602; 702; 802; 902) and for forming the defined phase boundary is introduced into the circular braid (602; 702; 802; 902),
the wall chamber formers (650; 750; 850; 950)
- remaining in the wall chambers (608; 708; 808; 908) at least until the matrix material (612; 712; 812; 912) is at least partly consolidated or cured and
- for forming free wall chambers (608; 708; 808; 908) being configured stationarily as part of the braiding machine (640; 740; 840) and continuously moving out of the wall chambers formed (608; 708; 808; 908) in the region of the at least partly cured or consolidated matrix (612; 712; 812; 912).

2. Process according to Claim 1 **characterized in that** during the continuous moving out of the wall chamber formers (650; 750; 850; 950) a wall chamber filling (726, 718; 824) is introduced into the wall chamber (708; 808) surrounded by at least partly cured matrix material (712; 812).

3. Process according to Claim 2 **characterized in that** the filling (824) is configured as a prefabricated solid continuous inlay (824).

4. Process according to Claim 2 **characterized in that** the filling (718) is introduced as a flowable medium (726) which consolidates after introduction in the wall chamber (708).

5. Process according to any one of Claims 1 to 4 **characterized in that** the circular braid (902) is shaped before consolidation of the matrix material (912).

6. Process according to Claim 5 **characterized in that** the shaping takes place with regard to the cross section.

7. Process according to any one of Claims 1 to 6 **characterized in that** at least two circular braids guided inside each or one another and the matrix material are joined together to form a rod-shaped fiber composite material, the wall chamber formers for forming the defined phase boundary being braided into at least one of the circular braids.

8. Process according to Claim 7 **characterized in that** the process is carried out in two or more stages, a rod-shaped fiber composite material produced in a first stage, comprising a first circular braid, being surrounded in a second stage with a second circular braid and being connected to the latter by the matrix material.

9. Apparatus for continuous production of a rod-shaped fiber composite material (600; 700; 800; 900) comprising
- a braiding apparatus (640; 740; 840) configured for braiding a circular braid (602; 702; 802; 902),
- an applying apparatus for applying a matrix material (612; 712; 812; 912) to helical strands (604a, 604b; 704a, 704b; 804a, 804b) of the circular braid (602; 702; 802; 902) and
- a curing apparatus for curing the matrix material (612; 712; 812; 912),
**characterized in that** the braiding apparatus (640; 740; 840) comprises stationary rod-shaped wall chamber formers (650; 750; 850; 950) of defined cylindrical external surface which are disposed such that they are braided into the wall of the circular braid (602; 702; 802; 902) and extend through the applying apparatus (670; 770; 870) into a region of the curing apparatus (670; 770; 870) in which the matrix material (612; 712; 812; 912) has been at least partly cured or consolidated.

10. Apparatus according to Claim 9 **characterized in that** the applying apparatus for applying the matrix material and the curing apparatus are configured as a unitary apparatus (670; 770; 870).

11. Apparatus according to Claim 9 or 10 **characterized in that** it comprises an appliance for reshaping the circular braid (902) after its production.

12. Apparatus according to Claim 11 **characterized in that** the wall chamber formers (950) are shaped such that a pattern (C, D, E) formed by the wall chamber formers (950) changes downstream of a region in which the circular braid is produced compared with the original pattern (B) such that the circular braid produced (902) is continuously changed with regard to its shape as it advances.

13. Apparatus according to any one of Claims 9 to 12 **characterized in that** the wall chamber formers (750; 850) are tubularly hollow.

14. Apparatus according to Claim 13 **characterized in that** the wall chamber formers (850) are configured to feed a solid inlay (824) into the wall chambers (808) formed by the wall chamber formers (850).

15. Apparatus according to Claim 14 **characterized in that** the wall chamber formers (750) are configured to feed a pressurized flowable medium (726) into the wall chambers (708) produced by the wall chamber formers (750) which consolidates or cures after introduction into the wall chambers (708).

## Revendications

1. Procédé de fabrication d'un matériau composite renforcé par des fibres en forme de barre (600 ; 700 ; 800 ; 900) comprenant un treillis rond de forme tubulaire (602 ; 702 ; 802 ; 902) constitué de torons hélicoïdaux enroulés vers la gauche et vers la droite (604a, 604b ; 704a, 704b ; 804a, 804b) et d'une matrice (612 ; 712 ; 812 ; 912) incorporant les torons hélicoïdaux,
- le treillis rond de forme tubulaire (602 ; 702 ; 802 ; 902) étant tissé autour d'éléments (650 ; 750 ; 850 ; 950) formant chambre à paroi en forme de barre disposés dans la région de la paroi du treillis rond et servant de noyaux de formage pour la réalisation d'une limite de phase définie, les éléments (650 ; 750 ; 850 ; 950) formant chambre à paroi étant tissés dans la région entre les torons hélicoïdaux (604a, 604b ; 704a, 704b ; 804a, 804b) enroulés vers la gauche et enroulés vers la droite et se croisant et ensuite
- le matériau de la matrice pour la formation de la matrice (612 ; 712 ; 812 ; 912) incorporant les torons hélicoïdaux (604a, 604b ; 704a, 704b ; 804a, 804b) du treillis rond (602 ; 702 ; 802 ; 902) et pour réaliser la limite de phase définie étant incorporé dans le treillis rond (602 ; 702 ; 802 ; 902), les éléments (650 ; 750 ; 850 ; 950) formant chambre à paroi
- restant dans les chambres à paroi (608 ; 708 ; 808 ; 908) au moins jusqu'à ce que le matériau de la matrice (612 ; 712 ; 812 ; 912) se soit au moins en partie solidifié ou ayant au moins en partie durci et
- étant réalisés de manière stationnaire en tant que partie du métier à tisser (640 ; 740 ; 840) pour former des chambres à paroi libres (608 ; 708 ; 808 ; 908) et sortant en continu hors des chambres à paroi formées (608 ; 708 ; 808 ; 908) dans la région de la matrice (612 ; 712 ; 812 ; 912) au moins en partie solidifiée ou durcie.

2. Procédé selon la revendication 1,
**caractérisé en ce que**
pendant la sortie en continu des éléments (650 ; 750 ; 850 ; 950) formant chambre à paroi, une charge de remplissage des chambres à paroi (726, 718 ; 824) est introduite dans la chambre à paroi (708 ; 808) entourée par le matériau de la matrice (712 ; 812) au moins en partie durci.

3. Procédé selon la revendication 2,
**caractérisé en ce que**
la charge de remplissage (824) est réalisée sous forme d'insert sans fin préfabriqué fixe (824).

4. Procédé selon la revendication 2,
**caractérisé en ce que**
la charge de remplissage (718) est introduite sous forme de milieu coulant (726) qui se solidifie après son introduction dans la chambre à paroi (708).

5. Procédé selon l'une quelconque des revendications 1 à 4,
**caractérisé en ce que**
le treillis rond (902) est mis en forme avant la solidification du matériau de la matrice (912).

6. Procédé selon la revendication 5,
**caractérisé en ce que**
la mise en forme s'effectue en rapport avec la section transversale.

7. Procédé selon l'une quelconque des revendications 1 à 6,
**caractérisé en ce que**
au moins deux treillis ronds guidés l'un dans l'autre et le matériau de la matrice sont assemblés pour former un matériau composite renforcé par des fibres en forme de barre, les éléments formant chambre à paroi étant tissés dans au moins l'un des treillis ronds pour réaliser la limite de phase définie.

8. Procédé selon la revendication 7,
**caractérisé en ce que**
le procédé est réalisé en plusieurs étapes, un matériau composite renforcé par des fibres en forme de barre produit dans une première étape avec un premier treillis rond, étant entouré dans une deuxième étape avec un deuxième treillis rond et étant connecté à celui-ci par le matériau de la matrice.

9. Dispositif pour la fabrication en continu d'un matériau composite renforcé par des fibres en forme de barre (600 ; 700 ; 800 ; 900) comprenant
- un métier à tisser (640 ; 740 ; 840), qui est réalisé pour le tissage d'un treillis rond (602 ; 702 ; 802 ; 902),
- un dispositif d'application pour l'application d'un matériau de matrice (612 ; 712 ; 812 ; 912) sur des torons hélicoïdaux (604a, 604b ; 704a, 704b ; 804a, 804b) du treillis rond (602 ; 702 ; 802 ; 902) et
- un dispositif de durcissement pour durcir le matériau de la matrice (612 ; 712 ; 812 ; 912),
**caractérisé en ce que**
le métier à tisser (640 ; 740 ; 840) présente des éléments (650 ; 750 ; 850 ; 950) formant chambre à paroi en forme de barre stationnaires avec une surface extérieure cylindrique définie, qui sont disposés de telle sorte qu'ils soient tissés dans la paroi du treillis rond (602 ; 702 ; 802 ; 902), et qu'ils s'étendent, par le biais du dispositif d'application (670 ; 770 ; 870), jusque dans une région du dispositif de durcissement (670 ; 770 ; 870) dans laquelle le matériau de matrice (612 ; 712 ; 812 ; 912) est au moins partiellement durci ou solidifié.

10. Dispositif selon la revendication 9,
**caractérisé en ce que**
le dispositif d'application pour l'application du matériau de matrice et le dispositif de durcissement sont réalisés sous forme d'un dispositif unitaire (670 ; 770 ; 870).

11. Dispositif selon la revendication 9 ou 10,
**caractérisé en ce**
**qu'**il présente un dispositif de mise en forme du treillis rond (902) après sa fabrication.

12. Dispositif selon la revendication 11,
**caractérisé en ce que**
les éléments formant chambre à paroi (950) sont formés de telle sorte qu'un motif (C, D, E) formé par les éléments formant chambre à paroi (950) soit modifié par rapport au motif initial (B) derrière une région dans laquelle le treillis rond est produit, de telle sorte que la forme du treillis rond produit (902) soit modifiée en continu pendant l'avance.

13. Dispositif selon l'une quelconque des revendications 9 à 12,
**caractérisé en ce que**
les éléments formant chambre à paroi (750 ; 850) sont réalisés sous forme creuse tubulaire.

14. Dispositif selon la revendication 13,
**caractérisé en ce que**
les éléments formant chambre à paroi (850) sont réalisés pour l'alimentation d'un insert fixe (824) dans les chambres à paroi (808) produites par les éléments formant chambre à paroi (850).

15. Dispositif selon la revendication 14,
**caractérisé en ce que**
les éléments formant chambre à paroi (750) sont réalisés pour l'alimentation d'un milieu coulant (726) sollicité par pression dans les chambres à paroi (708) produites par les éléments formant chambre à paroi (750), lequel milieu se solidifie ou durcit après son introduction dans les chambres à paroi (708).
